# EUROPÄISCHE PATENTSCHRIFT

(11) **EP 0 667 463 B1**
(45) Veröffentlichungstag und Bekanntmachung des Hinweises auf die Patenterteilung: **14.04.1999**
(21) Anmeldenummer: 94120511.4
(22) Anmeldetag: 23.12.1994
(51) Int. Cl.: F16B 37/08, F16L 3/237

(54) **Halteelement aus Kunststoff, insbesondere für Rohrleitungen**
Plastic retaining element, in particular for pipes
Elément de support en matière plastique, en particulier pour tuyaux

(30) Priorität: 09.02.1994 DE 4404117
(43) Veröffentlichungstag der Anmeldung: 16.08.1995
(73) Patentinhaber: TRW Automotive Electronics & Components GmbH & Co. KG, 78315 Radolfzell (DE)
(72) Erfinder: Kraus, Willibald, D-67269 Grünstadt (DE)
(74) Vertreter: Schieschke, Klaus, Dipl.-Ing.

(56) Entgegenhaltungen:
- EP-A- 0 597 718
- DE-A- 3 902 499
- FR-A- 2 558 902

## Beschreibung

Die Erfindung bezieht sich auf ein dreiteiliges Halteelement aus Kunststoff, insbesondere für Rohrleitungen, mit einem Mittelteil und einem Zwischenteil, in welchem mindestens ein mit einer Aufnahmeöffnung für ein Profilbolzen versehenes Befestigungsteil eingelagert ist.

Als Stand der Technik ist bereits ein derartiges Halteelement bekannt, welches dreiteilig ausgebildet ist (DE 40 34 546 C2). Die drei Teile bestehen hierbei wechselweise aus hartem bzw. weichem, dämpfenden Material. Es war hierbei das Problem zu lösen, schwingende, rohrförmige Teile auf einfache Weise zu dämpfen.

Zur Lösung desselben Problems ist aus der gattungbildenden DE- A- 39 02 499 ein vierteiliges Halteelement aus Kunststoffmit einem Mittelteil mit einer quaderförmigen Aussparung, in welche ein quaderförmiges Zwischenteil einschiebbar ist, mit einem mit einer Aufnahmeöffnung für einen Profilbolzen versehenen Befestigungsteil, welches in das Zwischenteil in Achsrichtung der Aufnahmeöffnung für den Profilbolzen einschiebbar ist, wobei das Befestigungsteil in vormontierter Position größtenteils außerhalb des Mittelteils an diesem angeordnet ist und in seiner Endposition am Profilbolzen arretierbar ist, bekannt. Das bekannte Halteelement weist noch ein Oberteil auf, das mittels des Befestigungsteils am Mittelteil und Zwischenteil festgelegt wird. Dieses vierteilige Halteelement ist so gestaltet, daß im zusammengebauten Zustand federnde Zungen eines äußeren Teils einen Befestigungsbolzen an seinem Außenumfang beaufschlagen. Ein drittes Teil umfaßt hierbei mit seinem vorderen Bereich die federnden Zungen und drückt diese gegen die Profilierung des Bolzens.

Darüber hinaus ist ein auf einem Tragbolzen aufsetzbares Befestigungselement bekannt (DE 30 47 462 C2), welches auf einem Tragbolzen aufgebracht wird. Mit der konischen Unterseite des Kopfes haltert dieses Befestigungselement einen metallischen Spannbügel, welcher einer weitere Befestigungsvorrichtung umschließt.

Demgegenüber liegt der vorliegenden Erfindung die Aufgabe zugrunde, ein Halteelement der eingangs genannten Art zu schaffen, welches mit einer Bolzenaufnahme mit gutem Toleranzausgleich versehen ist.

Diese Aufgabe wird durch ein Halteelement gemäß Anspruch 1 und insbesondere dadurch gelöst, daß das Befestigungsteil in vormontierter Position außerhalb des Mittelteils an diesem angeordnet ist und daß das Befestigungsteil in das Mittelteil einschiebbar und das Zwischenteil verschiebbar in das Mittelteil einlagerbar ist. Durch diese gegenseitige Verschiebbarkeit der einzelnen Teile des Halteelements ergibt sich bei einer konstruktiv vorteilhaften Bolzenaufnahme ein sehr guter Toleranzausgleich.

Das Halteelement ist erfindungsgemäß so gestaltet, daß zwischen dem Mittelteil und dem Befestigungsteil ein das Befestigungsteil aufnehmendes, in das Mittelteil einlagerbares Zwischenteil angeordnet ist. Hierbei können das Befestigungsteil und das Zwischenteil teleskopartig in das Mittelteil einschiebbar sein. Es besteht alternativ auch die Möglichkeit, daß das Befestigungsteil in Achsrichtung der Aufnahmeöffnung für den Profilbolzen in das Zwischenteil einschiebbar ist, wonach das Zwischenteil rechtwinklig zur Achsrichtung der Aufnahmeöffnung in das Mittelteil eingesetzt werden kann.

Vorteilhafte Weiterbildungen ergeben sich aus den Unteransprüchen.

Die Erfindung wird nachfolgend anhand von in der Zeichnung dargestellten Ausführungsbeispielen näher beschrieben. In der Zeichnung zeigen:
- Fig. 1 und 2: jeweils eine perspektivische Ansicht eines Halteelements;
- Fig. 3: eine Unteransicht des Halteelements nach Fig. 5;
- Fig. 4: eine Vorderansicht des Halteelements;
- Fig. 5: eine Seitenansicht des Halteelements;
- Fig. 6: eine perspektivische Ansicht des Halteelements mit angeformten Leitungshaltern in der Ausgangslage;
- Fig. 7: das Halteelement nach Fig. 6 in vormontierter Position;
- Fig. 8: eine perspektivische Ansicht einer anderen Ausführungsform des Halteelements;
- Fig. 9: eine Unteransicht des Halteelements nach Fig. 11;
- Fig. 10: eine Vorderansicht des Halteelements nach Fig. 11;
- Fig. 11: eine Seitenansicht des Halteelements nach Fig. 10;
- Fig. 12: eine perspektivische Ansicht des Halteelements nach Fig. 8.

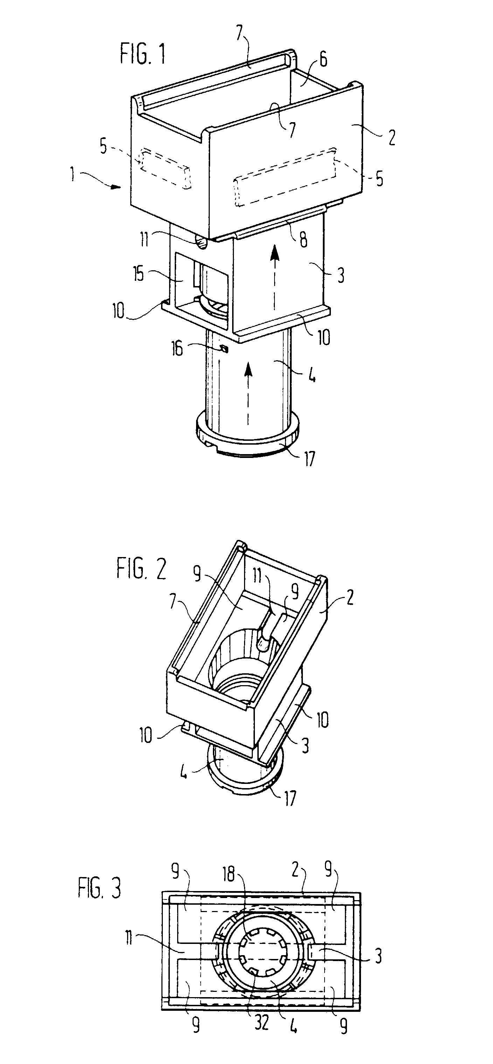

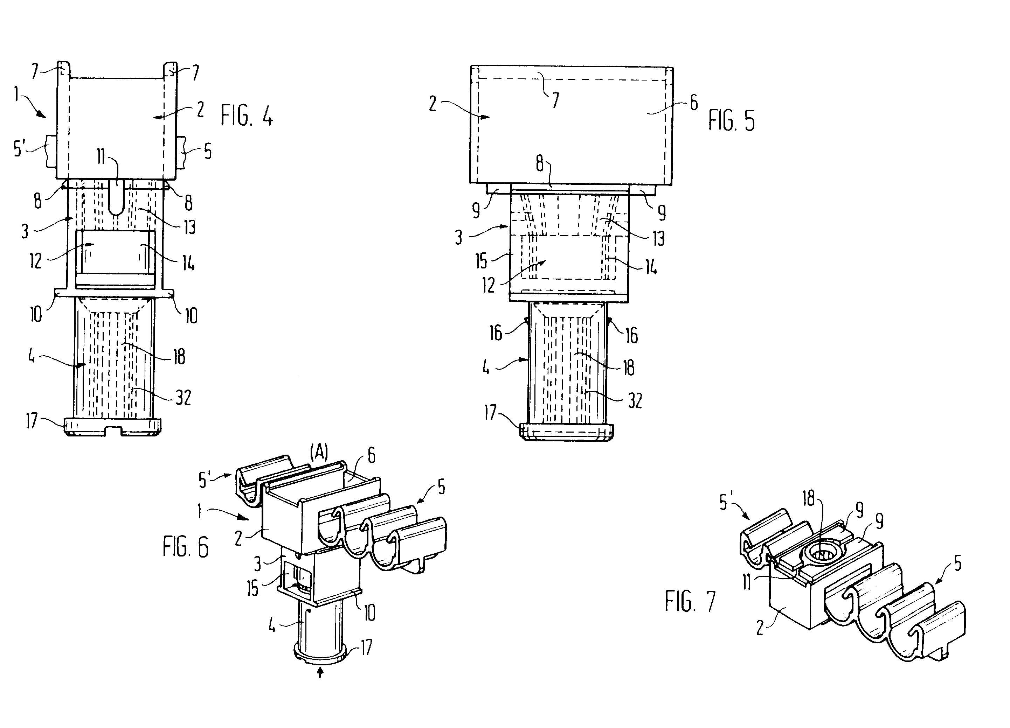

In den Figuren 1 bis 7 ist eine erste Ausführungsform des aus Kunststoff bestehenden erfindungsgemäßen Halteelements 1 dargestellt. Wie ersichtlich, ist es aus drei Teilen zusammengesetzt, nämlich einem Mittelteil 2, einem Zwischenteil 3 sowie einem Befestigungsteil 4. Das Befestigungsteil 4 ist mit einer im Bereich eines Bundes 17 abgeschlossenen Aufnahmeöffnung 18 für einen an einem Träger befestigten Profilbolzen versehen. Das Befestigungsteil 4 und das Zwischenteil 3 sind in Pfeilrichtung teleskopartig in das Mittelteil 2 einschiebbar. Dieses Mittelteil 2 ist rechteckig ausgebildet, wobei nach Fig. 6 und 7 beispielsweise an beiden Seitenflächen jeweils ein Lagerbereich 5 bzw. 5' zur Halterung von rohrförmigen Elementen angeformt ist. Hierbei kann der Lagerbereich 5' beispielsweise zur Aufnahme von Bremsleitungen und der Lagerbereich 5 zur Aufnahme von Kraftstoff leitungen konzipiert sein. Statt der in Fig. 6 und 7 dargestellten Ausführungsmöglichkeit besteht auch die Variante, daß an den Mittelteil 2 stirnseitig und/oder rückseitig eines der Lagerbereiche 5 bzw. 5' angeformt ist, wie schematisch aus Fig. 1 zu entnehmen ist.

Insbesondere aus den Figuren 1 sowie 4 und 5 ist erkennbar, daß auch das Zwischenteil 3 rechteckförmig ausgebildet ist. Entsprechend weist das Mittelteil 2 eine rechteckförmige Aussparung 6 auf, in welche das Zwischenteil 3 eingelagert werden kann. Hierbei besitzt das Zwischenteil 3 an einander gegenüberliegenden Seitenflächen jeweils eine Rastnase 8, welche sich in einer Freiarbeitung 7 des Mittelteils 2 einlagern kann.

Weiterhin besitzt das Zwischenteil 3 nach Fig. 3 und 5 im oberen Bereich federnde, die rechteckförmige Aussparung 6 des Mittelteils 2 im montierten Zustand übergreifenden Flansche 9, welche durch einen Schlitz 11 voneinander getrennt sind. Durch diese Flansche 9 wird verhindert, daß sich beispielsweise ein Grobgewindebolzen in unerwünschter Weise in dem Zwischenteil 3 bzw. dem Befestigungsteil 4 einlagert, wenn die Toleranz zwischen diesem Grobgewindebolzen und Leitungen zu groß ist. Damit wird einwandfrei eine Fehlmontage verhindert.

Das Zwischenteil 3 weist nach Fig. 4 und 5 eine durchgehende Öffnung 12 zur Aufnahme des Befestigungsteils 4 auf, welches einen zylindermantelförmigen Umfang besitzt. Aus Fig. 4 und 5 geht weiterhin hervor, daß die durchgehende Öffnung 12 des Zwischenteils 3 einen oberen konischen Bereich 13 und einen daran anschließenden unteren, zylindrischen Bereich 14 besitzt. Durch den konischen Bereich 13 ergibt sich vorteilhafterweise eine Vorzentrierung bei Montage, wenn das Halteelement 1 vom Mittelteil her auf einen Profilbolzen aufgesetzt wird.

Aus Fig. 1 ist erkennbar, daß der zylindrische Bereich 14 beidseitig in einen Durchbruch 15 übergeht. Aus Fig. 5 geht hervor, daß der zylindermantelförmige Außenumfang des Befestigungsteils 4 mit mindestens zwei, über den Umfang verteilten Nocken 16 als Verliersicherung versehen ist. Diese Verliersicherung tritt insbesondere beim Transport und bei einer Demontage von Bolzen in Aktion.

Das Befestigungsteil 4 weist stirnseitig den umlaufenden Bund 17 auf, welcher als Einwirkbereich bei der Montage und zur Anlage an der Unterseite des Mittelteils 3 im montierten Zustand dienen kann. Entsprechend besitzt das Zwischenteil 3 im unteren Bereich jeweils einen Anlageflansch 10 (Fig. 1, Fig. 4), welcher im montierten Zustand an der Unterseite des Mittelteils 2 anliegt.

Fig. 6 zeigt das erfindungsgemäße Halteelement 1 z.B. vor der Montage: Ein nicht dargestellter, z.B. an einer Trägerplatte hängend befestigter Profilbolzen befindet sich im Bereich (A). Wird nun in Pfeilrichtung Druck auf die Stirnfläche des Befestigungsteils 4 ausgeübt, so schieben sich das Befestigungsteil 4 und das Zwischenteil 3 teleskopartig in das Mittelteil 2. Die profilierte Aufnahmeöffnung 18 umgreift den Profilbolzen.

Nach Fig. 7 besteht außerdem die Möglichkeit einer Vormontage. Hier sind das Befestigungsteil 4 und das Zwischenteil 3 insgesamt in dem Mittelteil 2 eingelagert. Es ist erkennbar, daß die Flansche 9, welche durch einen Schlitz 11 nach Fig. 3 voneinander getrennt sind, im montierten Zustand oberhalb der Öffnung 6 des Mittelteils 2 liegen, wodurch eine Fehlmontage einwandfrei verhindert wird. Der Profilbolzen wurde aus Gründen der Übersichtlichkeit nicht dargestellt.

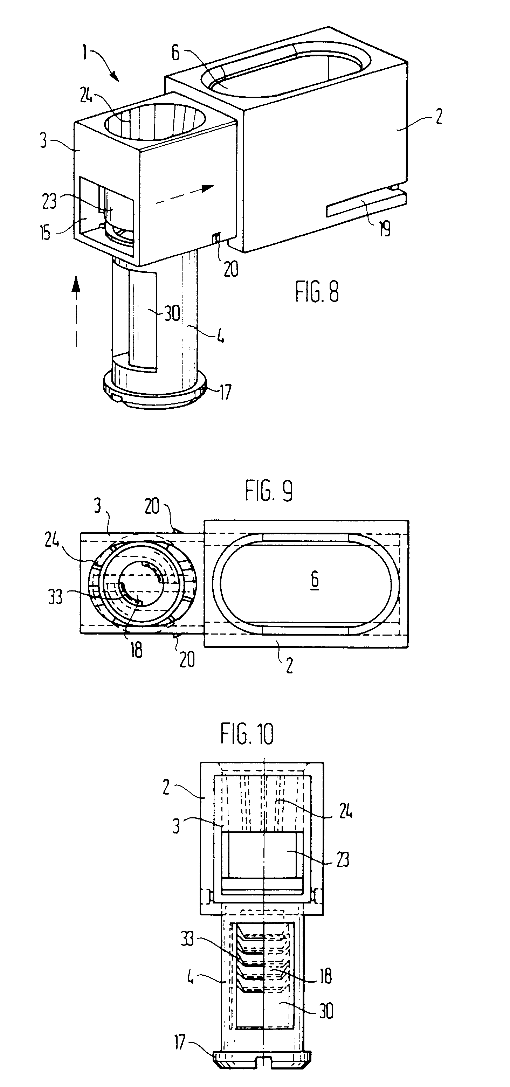

Bei der Ausführungsform nach Fig. 1 bis 7 sind das Befestigungsteil 4 und das Zwischenteil 3 teleskopartig in das Mittelteil 2 einschiebbar. Nach der Ausführungsform gemäß Fig. 8 bis 12 besteht auch die Möglichkeit, daß das Befestigungsteil 4 in Achsrichtung der Aufnahmeöffnung 18 in das Zwischenteil 3 einschiebbar ist. Danach kann das Zwischenteil 3 zusammen mit dem Befestigungsteil 4 rechtwinklig zur Achsrichtung der Aufnahmeöffnung 18 in das Mittelteil 2 eingesetzt werden.

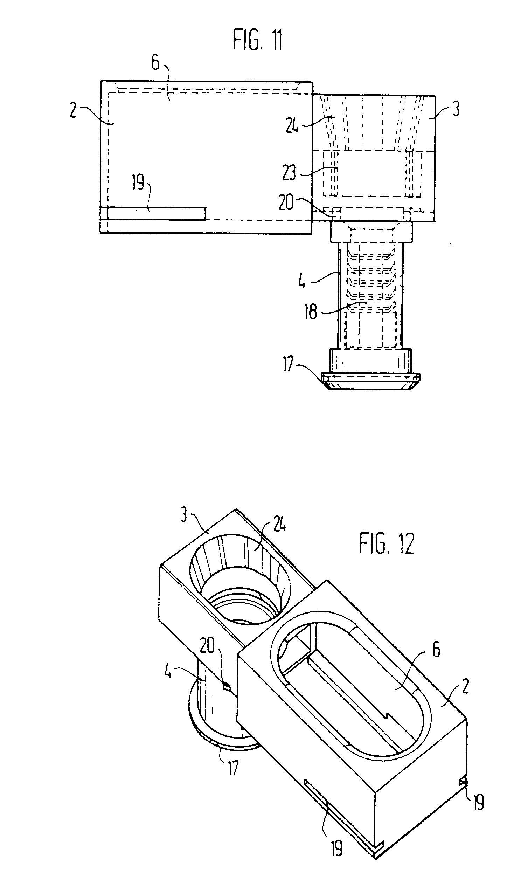

Wiederum sind das Mittelteil 2 und das Zwischenteil 3 jeweils rechtwinklig ausgebildet, wobei das Zwischenteil 3 in dem Mittelteil 2 arretierbar ist. Hierzu kann das Mittelteil 2 nach Fig. 8 bzw. 11 beidseitig jeweils eine Führung 19 in Form eines Schlitzes aufweisen, wohingegen die korrespondierenden Seitenflächen des Zwischenteils 3 entsprechende Zungen 20 besitzen, welche in dem Schlitz 19 geführt sind.

Das Zwischenteil 3 ist mit einem Durchbruch 15 im Bereich einer zylindrischen Führung 23 für das Befestigungsteil 4 versehen. Oberhalb dieser zylindrischen Führung 23 befindet sich eine konische Führung 24, welche die gleiche Wirkung besitzt, wie der konische Bereich 13 bei der Ausführungsform nach Fig. 1 bis 7. Das Mittelteil 2 besitzt wiederum eine obere Öffnung 6, welche mit der zylindrischen Führung 23 bzw. der konischen Führung 24 des Zwischenteils 3 korrespondiert.

Aus Fig. 8 geht darüber hinaus hervor, daß das Befestigungsteil 4 beispielsweise einen Durchbruch 30 besitzt, wobei an der verbleibenden Innenwandung an sich bekannte Rippen bzw. Stege 33 vorliegen, welche in die entsprechenden Gegenprofile eines nicht dargestellten Profilbolzens eingreifen.

Es besteht jedoch auch analog der Ausführungsform nach Fig. 1 bis 7 die Möglichkeit, längs verlaufende Profilierungen 32 am Umfang der Aufnahmeöffnung 18 vorzusehen, welche mit den entsprechenden Profilierungen des Profilbolzens zusammenwirken.

Die Montage auf einem nicht dargestellten Profilbolzen erfolgt analog Fig. 6, nachdem das Zwischenteil 3 seitlich in das Mittelteil 2 eingeschoben ist. Das Mittelteil 2 kann wie bei der Ausführungsform nach Fig. 1 bis 7 Haltebereiche 5 und/oder 5' aufweisen.

Insgesamt ergibt sich ein aus Kunststoff bestehendes Halteelement, bei welchem einzelne beispielsweise jeweils durch ein Filmscharnier verbundene Teile entweder teleskopartig und/oder seitlich ineinander verschiebbar sind, wobei durch diese gegeneinander durchführbare Verschiebbarkeit ein guter Toleranzausgleich in Höhen- und/oder Seitenposition auf einfache Weise bewirkt wird.

## Patentansprüche

1. Dreiteiliges Halteelement aus Kunststoff, insbesondere für Rohrleitungen,
a) mit einem Mittelteil (2) mit einer quaderförmigen Aussparung (6), in welche ein quaderförmig ausgebildetes Zwischenteil (3) verschiebbar einlagerbar ist,
b) mit einem mit einer Aufnahmeöffnung (18) für einen Profilbolzen versehenen Befestigungsteil (4), welches in das Zwischenteil (3) einlagerbar ist,
c) wobei das Befestigungsteil (4) in vormontierter Position außerhalb des Mittelteils (2) an diesem angeordnet ist und
d) das Befestigungsteil in eingelagerter Endposition an dem Profilbolzen arretierbar ist,
e) wobei das Befestigungsteil (4) in das Zwischenteil (3) in Achsrichtung der Aufnahmeöffnung (18) für den Profilbolzen und das Zwischenteil (3) in das Mittelteil (2) in Achsrichtung der Aufnahmeöffnung (18) oder hierzu rechtwinklig einschiebbar ist.

2. Halteelement nach Anspruch 1,
dadurch gekennzeichnet,
daß das Mittelteil (2) im Bereich der quaderförmigen Aussparung (6) mindestens eine Freiarbeitung (7) aufweist, in welcher mindestens eine Rastnase (8) des Zwischenteils (3) arretierbar ist.

3. Halteelement nach Anspruch 2,
dadurch gekennzeichnet,
daß beidseitig der quaderförmigen Aussparung (6) jeweils eine eine Rastnase (8) des Zwischenteils (3) aufnehmende Freiarbeitung (7) angeordnet ist.

4. Halteelement nach Anspruch 3,
dadurch gekennzeichnet,
daß das Zwischenteil (3) im oberen Bereich federnde, die quaderförmige Aussparung (6) des Mittelteils (2) im montierten Zustand übergreifende Flansche (9) aufweist.

5. Halteelement nach Anspruch 2 bis 4,
dadurch gekennzeichnet,
daß das Zwischenteil (3) im unteren Bereich beidseitig an gegenüberliegende Seitenflächen angeformte Anlageflansche (10) aufweist.

6. Halteelement nach Anspruch 2 bis 5,
dadurch gekennzeichnet,
daß das Zwischenteil (1) eine durchgehende Öffnung (12) zur Aufnahme des Befestigungsteils (4) aufweist.

7. Halteelement nach Anspruch 6,
dadurch gekennzeichnet,
daß die durchgehende Öffnung (12) des Zwischenteils (3) einen oberen konischen Bereich (12) und einen daran anschließenden unteren, zylindrischen Bereich (14) aufweist.

8. Halteelement nach Anspruch 7,
dadurch gekennzeichnet,
daß der zylindrische Bereich (14) beidseitig in einem Durchbruch (15) übergeht.

9. Halteelement nach einem der vorhergehenden Ansprüche,
dadurch gekennzeichnet,
daß der zylindermantelförmige Außenumfang des Befestigungsteils (4) mit mindestens zwei über den Umfang verteilten Nocken (16) als Verliersicherung versehen ist.

10. Halteelement nach Anspruch 1,
gekennzeichnet durch mindestens eine Führung (19, 20) zwischen dem Mittelteil (2) und dem Zwischenteil (3).

11. Halteelement nach Anspruch 10,
dadurch gekennzeichnet,
daß die Führung (19, 20) mit mindestens einem Rastbereich versehen ist.

12. Halteelement nach Anspruch 11,
dadurch gekennzeichnet,
daß das Zwischenteil (3) mit einem Durchbruch (15) im Bereich der zylindrischen Führung (23) für das Befestigungsteil (4) versehen ist, oberhalb welcher eine konische Führung (24) angeordnet ist.

13. Halteelement nach einem der vorhergehenden Ansprüche,
dadurch gekennzeichnet,
daß mindestens ein Lagerbereich (5, 5') mit einem quer verlaufenden Steg versehen ist, welcher eine Freiarbeitung zur Aufnahme einer Wulst einer Rohrleitung aufweist.

## Claims

1. Three-part plastic retaining element, in particular for pipelines,
a) having a central part (2) with a cuboidal hollow (6), in which a cuboidal intermediate part (3) can be installed in a displaceable manner,
b) having a fastening part (4) which is provided with a receiving opening (18) for a profile bolt and can be installed in the intermediate part (3),
c) it being the case that, in the preassembled position, the fastening part (4) is arranged on the central part (2), outside the same, and
d) the fastening part can be arrested on the profile bolt in an installed end position,
e) it being the case that the fastening part (4) can be pushed into the intermediate part (3) in the axial direction of the receiving opening (18) for the profile bolt, and the intermediate part (3) can be pushed into the central part (2) in the axial direction of the receiving opening (18) or at right angles thereto.

2. Retaining element according to Claim 1, characterized in that, in the region of the cuboidal hollow (6), the central part (2) has at least one recess (7), in which at least one latching nose (8) of the intermediate part (3) can be arrested.

3. Retaining element according to Claim 2, characterized in that in each case one recess (7), which receives a latching nose (8) of the intermediate part (3), is arranged on both sides of the cuboidal hollow (6).

4. Retaining element according to Claim 3, characterized in that, in the top region, the intermediate part (3) has resilient flanges (9) which, in the assembled state, overlap the cuboidal hollow (6) of the central part (2).

5. Retaining element according to Claims 2 to 4, characterized in that, in the bottom region, the intermediate part (3) has abutment flanges (10) which are integrally formed, on both sides, on opposite side surfaces.

6. Retaining element according to Claims 2 to 5, characterized in that the intermediate part (3) has a through-opening (12) for receiving the fastening part (4).

7. Retaining element according to Claim 6, characterized in that the through-opening (12) of the intermediate part (3) has a top, conical region (13) and an adjoining bottom, cylindrical region (14).

8. Retaining element according to Claim 7, characterized in that the cylindrical region (14) merges on both sides into a through-passage (15).

9. Retaining element according to one of the preceding claims, characterized in that the cylinder-jacket-like outer circumference of the fastening part (4) is provided with at least two protrusions (16) which are distributed over the circumference as captive securing means.

10. Retaining element according to Claim 1, characterized by at least one guide (19, 20) between the central part (2) and the intermediate part (3).

11. Retaining element according to Claim 10, characterized in that the guide (19, 20) is provided with at least one latching region.

12. Retaining element according to Claim 11, characterized in that the intermediate part (3) is provided with a through-passage (15) in the region of the cylindrical guide (23) for the fastening part (4), a conical guide (24) being arranged above said cylindrical guide (23).

13. Retaining element according to one of the preceding claims, characterized in that at least one bearing region (5, 5') is provided with a transversely running web which has a recess for receiving a bead of a pipeline.

## Revendications

1. Elément de retenue en matière plastique constitué de trois parties, notamment destiné à des tuyaux,
a) comprenant une partie centrale (2) munie d'un évidement rectangulaire (6) dans lequel une partie intermédiaire (3), de réalisation rectangulaire, peut être insérée par coulissement,
b) comprenant une partie de fixation (4) qui est pourvue d'un orifice de réception (18) destiné à un tenon profilé, et peut être insérée dans la partie intermédiaire (3),
c) la partie de fixation (4) étant disposée, en position préassemblée, sur la partie centrale (2) et à l'extérieur de cette dernière, et
d) la partie de fixation pouvant être arrêtée sur le tenon profilé en position extrême d'insertion,
e) la partie de fixation (4) pouvant être insérée, dans la partie intermédiaire (3), dans la direction axiale de l'orifice de réception (18) destiné au tenon profilé, et ladite partie intermédiaire (3) pouvant être insérée, dans la partie centrale (2), dans la direction axiale dudit orifice de réception (18) ou perpendiculairement à cette direction.

2. Elément de retenue selon la revendication 1,
caractérisé par le fait
que la partie centrale (2) présente, dans la région de l'évidement rectangulaire (6), au moins une dépouille (7) dans laquelle au moins un mentonnet encliquetable (8) de la partie intermédiaire (3) peut être arrêté.

3. Elément de retenue selon la revendication 2,
caractérisé par le fait
qu'une dépouille respective (7), recevant un mentonnet encliquetable (8) de la partie intermédiaire (3), se trouve de part et d'autre de l'évidement rectangulaire (6).

4. Elément de retenue selon la revendication 3,
caractérisé par le fait
que la partie intermédiaire (3) présente, dans la région supérieure, des ailes élastiques (9) venant coiffer, à l'état monté, l'évidement rectangulaire (6) de la partie centrale (2).

5. Elément de retenue selon les revendications 2 à 4,
caractérisé par le fait
que la partie intermédiaire (3) présente, dans la région inférieure, des rebords d'appui (10) venus solidairement de moulage, de part et d'autre, sur des surfaces latérales opposées.

6. Elément de retenue selon les revendications 2 à 5,
caractérisé par le fait
que la partie intermédiaire (1) présente un orifice ininterrompu (12), en vue de recevoir la partie de fixation (4).

7. Elément de retenue selon la revendication 6,
caractérisé par le fait
que l'orifice ininterrompu (12) de la partie intermédiaire (3) comporte une région supérieure tronconique (12) et une région inférieure cylindrique (14) se rattachant à la région précitée.

8. Elément de retenue selon la revendication 7,
caractérisé par le fait
que la région cylindrique (14) fusionne, de part et d'autre, dans une perforation (15).

9. Elément de retenue selon l'une des revendications précédentes,
caractérisé par le fait
que le pourtour extérieur de la partie de fixation (4), configuré en une enveloppe cylindrique, est doté d'au moins deux protubérances (16) réparties sur la périphérie et matérialisant un système d'arrêt imperdable.

10. Elément de retenue selon la revendication 1,
caractérisé par au moins un ensemble de guidage (19, 20) entre la partie centrale (2) et la partie intermédiaire (3).

11. Elément de retenue selon la revendication 10,
caractérisé par le fait
que l'ensemble de guidage (19, 20) est muni d'au moins une zone d'encliquetage.

12. Elément de retenue selon la revendication 11,
caractérisé par le fait
que la partie intermédiaire (3) est pourvue d'une perforation (15) dans la région du guide cylindrique (23) qui est affecté à la partie de fixation (4), et au-dessus duquel se trouve un guide tronconique (24).

13. Elément de retenue selon l'une des revendications précédentes,
caractérisé par le fait
qu'au moins une zone de montage (5, 5') est dotée d'une membrure s'étendant transversalement et présentant une dépouille en vue de recevoir un bourrelet d'un conduit tubulaire.
